# EUROPÄISCHE PATENTSCHRIFT

(11) **EP 2 999 906 B1**
(45) Veröffentlichungstag und Bekanntmachung des Hinweises auf die Patenterteilung: **08.11.2017**
(21) Anmeldenummer: 14711228.8
(22) Anmeldetag: 17.03.2014
(51) Int. Cl.: F16J 15/34

(54) **GLEITRINGDICHTUNG MIT VERBESSERTER DREHMOMENTÜBERTRAGUNG**
SLIDE RING SEAL WITH IMPROVED TORQUE TRANSMISSION
GARNITURE MÉCANIQUE D'ÉTANCHÉITÉ OFFRANT UNE TRANSMISSION DE COUPLE AMÉLIORÉE

(30) Priorität: 10.05.2013 DE 102013008094
(43) Veröffentlichungstag der Anmeldung: 30.03.2016
(73) Patentinhaber: EagleBurgmann Germany GmbH & Co. KG, 82515 Wolfratshausen (DE)
(72) Erfinder: FICHTNER, Joseph, 82515 Wolfratshausen (DE); GERG, Josef, 83674 Gaißach (DE); MATUSCHEK, Alfred, 83623 Ascholding (DE); SKRZIDLO, Joachim, 82515 Wolfratshausen (DE)
(74) Vertreter: Hoefer & Partner Patentanwälte mbB
(86) Internationale Anmeldenummer: PCT/EP2014/055298
(87) Internationale Veröffentlichungsnummer: WO 2014/180593

(56) Entgegenhaltungen:
- DE-A1- 4 408 956
- DE-U1- 9 409 055
- FR-A3- 2 652 393

## Beschreibung

Die vorliegende Erfindung betrifft eine Gleitringdichtungsanordnung mit einem rotierenden und stationären Gleitring, welche eine verbesserte Übertragung von Drehmoment zum rotierenden Gleitring mittels wenigstens einer Passfeder ermöglicht.

Gleitringdichtungsanordnungen sind aus dem Stand der Technik in unterschiedlichen Ausgestaltungen bekannt. Ein Problemkreis bei Gleitringdichtungsanordnungen ist hierbei insbesondere eine Drehmomentübertragung von einer Welle bzw. Wellenhülse auf den rotierenden Gleitring. Hierbei werden häufig Stifte oder dergleichen als Mitnehmerelemente verwendet. Dies führt jedoch zu unerwünschten Öffnungen/Bohrungen bzw. Schwächungen im Gleitring, welche insbesondere in einem hochbelasteten Betrieb die Festigkeit der rotierenden Gleitringe beeinträchtigen können. Häufig werden zur Drehmomentübertragung sogenannte Mitnehmerelemente verwendet, welche das Drehmoment von einer Wellenhülse auf den rotierenden Gleitring übertragen. Hierbei muss jedoch auch eine Übertragung des Drehmoments von der Wellenhülse zum Mitnehmerelement erfolgen. Aus der DE 44 08 956 A1 ist beispielsweise eine Gleitringdichtungsanordnung gemäß dem Oberbegriff des Anspruchs 1 bekannt, bei der ein Drehmoment von einer Welle über eine Passfeder übertragen wird. Grundsätzlich erschweren jedoch die Passfedern zur Drehmomentübertragung insbesondere eine axiale Fixierung, und eine Montage der Gleitringdichtungsanordnung, welche üblicherweise durch axiales Aufschieben der einzelnen Bauteile der Gleitringdichtungsanordnung über eine Welle erfolgt. Insbesondere wird bisher ein Mitnehmerelement dabei mit einem axialen Schlitz versehen, in welchen der vorstehende Teil der Passfeder eingreift. Hierbei ist jedoch eine exakte axiale Positionierung des Mitnehmerelements relativ zur Passfeder nicht möglich. Ferner zeigt die FR 2 652 393 verschiedene Formen von Passfedern.

Es ist daher Aufgabe der vorliegenden Erfindung, eine Gleitringdichtungsanordnung bereitzustellen, welche bei einfachem Aufbau und einfacher, kostengünstiger Herstellbarkeit einerseits eine gute axiale Fixierung und eine einfache Montage der Gleitringdichtungsanordnung ermöglicht und andererseits auch eine sichere Übertragung eines Drehmoments ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtung mit den Merkmalen des Anspruchs 1 weist den Vorteil auf, dass eine einfache Montage möglich ist und insbesondere eine Teileanzahl der Gleitringdichtungsanordnung reduziert werden kann. Ferner kann eine sichere Drehmomentübertragung ermöglicht werden und ein Mitnehmerelement, welches Drehmoment von einem Rotationsbauteil, insbesondere einer Wellenhülse, auf einen rotierenden Gleitring überträgt, kann sehr einfach und kostengünstig hergestellt werden. Dies wird erfindungsgemäß dadurch erreicht, dass die Passfeder eine besondere Form mit einem Basisbereich und einem oberen Abschlussbereich aufweist, wobei der obere Abschlussbereich bogenförmig ausgebildet ist. Somit weist die erfindungsgemäße Passfeder im Vergleich zu den bisher bekannten Passfedern eine bogendachförmige Oberfläche auf, welche zur radialen Außenseite gerichtet ist.

Besonders bevorzugt weist das Mitnehmerelement eine axiale Anlagefläche auf, an welcher die Passfeder anliegt. Somit dient die Passfeder bei der Montage der Gleitringdichtungsanordnung als Anschlag, und das Mitnehmerelement kann bis zu einer definierten Position, nämlich an der Position, an welcher das Mitnehmerelement an der Passfeder anliegt, aufgeschoben werden. Dadurch ist eine genaue Positionierung des Mitnehmerelements und somit auch des rotierenden Gleitrings, welcher durch das Mitnehmerelement gehalten wird, möglich.

Besonders bevorzugt ist der obere Abschlussbereich der Passfeder im Schnitt halbkreisförmig. Hierdurch wird eine symmetrische Passfeder bereitgestellt, welche besonders einfach montierbar ist.

Weiter bevorzugt weist die Passfeder eine ebene Anlagefläche auf, welche sich mit der axialen Anlagefläche des Mitnehmerelements in Kontakt befindet. Die ebene Anlagefläche der Passfeder ist dabei vorzugsweise senkrecht zu einer Längsachse der Gleitringdichtungsanordnung.

Gemäß einer bevorzugten alternativen Ausgestaltung der Erfindung weist die Passfeder wenigstens eine erste, abgerundete Stirnseite auf. Besonders bevorzugt weist die Passfeder eine zweite abgerundete Stirnseite auf. Insbesondere wenn beide Stirnseiten abgerundet sind, weist die Passfeder somit einen oberen, bogenförmigen Abschlussbereich sowie die beiden abgerundeten Stirnseiten auf und somit insgesamt drei gewölbte Flächen auf.

Weiter bevorzugt weist das Mitnehmerelement eine Ausnehmung zur teilweisen Aufnahme der Passfeder auf, wobei die Ausnehmung bogenförmig ist. Hierdurch kann das Mitnehmerelement besonders kostengünstig bereitgestellt werden. Die Ausnehmung wird vorzugsweise mittels eines spanabhebenden Verfahrens, z.B. Fräsen, erzeugt.

Vorzugsweise umfasst die erfindungsgemäße Gleitringdichtungsanordnung eine Vielzahl von Passfedern, welche entlang des Umfangs der Wellenhülle in gleichmäßigen Abständen angeordnet sind.

Weiter bevorzugt umfasst die Gleitringdichtungsanordnung neben der ersten Gleitringdichtung eine zweite Gleitringdichtung mit einem zweiten rotierenden Gleitring und einem zweiten stationären Gleitring. Derartige Gleitringdichtungsanordnungen mit zwei Gleitringdichtungen werden auch als Tandemanordnungen bezeichnet. Hierbei wirkt sich die erfindungsgemäße Idee der speziell geformten Passfeder insbesondere in der Montage sehr vorteilhaft aus, da derartige Tandemanordnungen eine relativ lange axiale Baugröße haben.

Nachfolgend werden unter Bezugnahme auf die begleitende Zeichnung bevorzugte Ausführungsbeispiele der Erfindung im Detail beschrieben. Gleiche bzw. funktional gleiche Teile sind dabei jeweils mit den gleichen Bezugszeichen bezeichnet. In der Zeichnung ist:
- Fig. 1: eine schematische Schnittansicht einer Gleitringdichtungsanordnung gemäß einem ersten Ausführungsbeispiel der Erfindung,
- Fig. 2: eine perspektivische Ansicht einer Passfeder von Fig. 1,
- Fig. 3: eine schematische stirnseitige Ansicht eines Mitnehmers von Fig. 1,
- Fig. 4: eine schematische, perspektivische Ansicht einer Passfeder gemäß einem zweiten Ausführungsbeispiel der Erfindung und
- Fig. 5: eine schematische Schnittansicht einer Gleitringdichtungsanordnung gemäß einem dritten Ausführungsbeispiel der Erfindung.

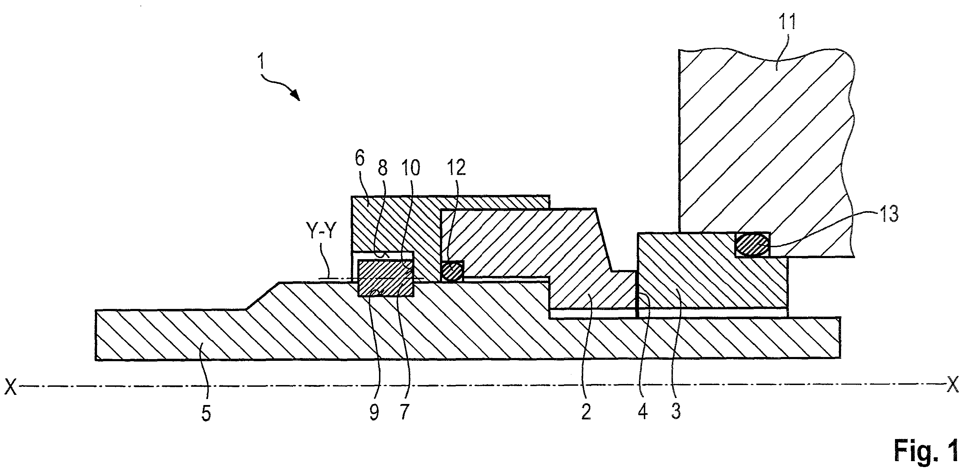

Nachfolgend wird unter Bezugnahme auf die Fig. 1 bis 3 eine Gleitringdichtungsanordnung 1 gemäß einem ersten Ausführungsbeispiel der Erfindung im Detail beschrieben.

Wie aus Fig. 1 ersichtlich ist, umfasst die Gleitringdichtungsanordnung 1 eine Gleitringdichtung mit einem rotierenden Gleitring 2 und einem stationären Gleitring 3, welche zwischen sich einen Dichtspalt 4 begrenzen.

Ferner umfasst die Gleitringdichtungsanordnung eine einteilige Wellenhülse, welche auf einer nicht gezeigten Welle angeordnet ist und sich mit dieser dreht. In Fig. 1 ist mit X-X eine Mittelachse der Gleitringdichtungsanordnung bezeichnet.

Ferner umfasst die Gleitringdichtungsanordnung ein ringförmiges Mitnehmerelement 6, welches eine Rotation der Wellenhülse 5 auf den rotierenden Gleitring 2 überträgt. Dies kann mittels einer Presspassung oder durch weitere Übertragungselemente, wie beispielsweise Stifte, erfolgen. Zur Drehmomentübertragung zwischen der Wellenhülse 5 und dem Mitnehmerelement 6 ist eine Passfeder 7 vorgesehen. Die Passfeder 7 ist in einer ersten Ausnehmung 8 im Mitnehmerelement 6 und einer zweiten Ausnehmung 9 in der Wellenhülse 5 angeordnet.

Die erste Ausnehmung 8 im Mitnehmerelement 6 ist eine Fräsausnehmung, d.h., die Ausnehmung ist mittels eines Fräsverfahrens hergestellt. Hierdurch ergibt sich am Ende der ersten Ausnehmung 8 eine Anlagefläche 10. Die Anlagefläche 10 der Ausnehmung 8 liegt in einer Ebene, welche senkrecht zur Mittelachse X-X ist.

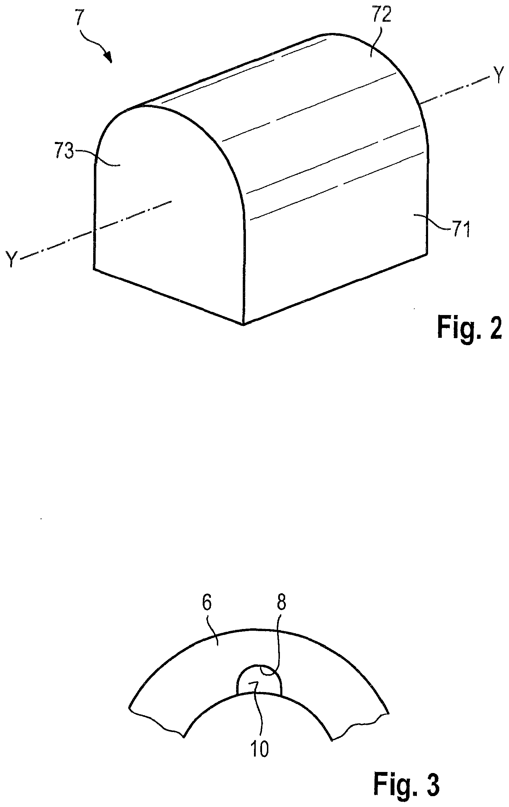

Fig. 3 zeigt die stirnseitige Ansicht des Mitnehmerelements 6, welches die bogenförmige Form der ersten Ausnehmung 8 zeigt. Die erste Ausnehmung 8 ist dabei an einem inneren Umfang des Mitnehmerelements 6 ausgebildet. Das Ende der ersten Ausnehmung 8 bildet die ebene Anlagefläche 10.

Der stationäre Gleitring 3 ist mit einem Gehäuse 11 verbunden. Die Bezugszeichen 12 und 13 bezeichnen O-Ringe.

Die Passfeder 7 ist im Detail in Fig. 2 gezeigt. Wie aus Fig. 2 ersichtlich ist, umfasst die Passfeder 7 einen Basisbereich 71 und einen oberen Abschlussbereich 72, welcher bogenförmig ausgebildet ist. Der obere Abschlussbereich 72 geht unmittelbar in den Basisbereich 71 über. In diesem Ausführungsbeispiel weist der obere Abschlussbereich 72 im Schnitt eine Halbkreisform auf. Die Achse Y-Y bezeichnet dabei eine Längsachse der Passfeder 7. Wie aus Fig. 1 ersichtlich ist, ist die Passfeder 7 dabei derart in der Gleitringdichtungsanordnung angeordnet, dass die Längsachse Y-Y der Passfeder 7 parallel zur Mittelachse X-X der Gleitringdichtungsanordnung ist.

Die Passfeder 7 umfasst ferner eine ebene Anlagefläche 73, welche im montierten Zustand der Passfeder parallel zur Anlagefläche 10 am Mitnehmerelement 6 ist. Im montierten Zustand berühren sich somit die beiden Anlageflächen des Mitnehmerelements 6 und der Passfeder 7.

Eine Montage der erfindungsgemäßen Gleitringdichtungsanordnung erfolgt dabei derart, dass zuerst die Passfeder 7 in die Wellenhülse 5 eingelegt wird und anschließend das Mitnehmerelement 6 in axialer Richtung aufgeschoben wird, bis die Anlagefläche 10 des Mitnehmerelements 6 mit der ebenen Anlagefläche 73 der Passfeder in Kontakt kommt. Da zwischen der Passfeder 7 und der zweiten Ausnehmung 9 in der Wellenhülse 5 eine Passverbindung ausgebildet ist, ist eine Position des Mitnehmerelements 6 gegenüber der Wellenhülse 5 bei Kontakt der beiden Anlageflächen 10, 73 exakt vorgegeben, da eine Passung zwischen dem Basisbereich 71 der Passfeder 7 und der zweiten Ausnehmung vorhanden ist. Da das Mitnehmerelement 6 den rotierenden Gleitring 2 hält, ist somit auch eine Position des rotierenden Gleitrings 2 vorgegeben.

Wie aus Fig. 1 ersichtlich ist, kann erfindungsgemäß somit eine Gleitringdichtungsanordnung bereitgestellt werden, welche nur eine sehr geringe Teileanzahl aufweist. Dabei übernimmt erfindungsgemäß die Passfeder 7 neben der Drehmomentsübertragungsfunktion auch noch eine Funktion einer Positionierung des Mitnehmerelements 6 gegenüber der Wellenhülse 5. Dabei kann die erste Ausnehmung 8 im Mitnehmerelement 6 sehr einfach durch ein spanabhebendes Verfahren hergestellt werden. Somit kann erfindungsgemäß eine signifikante Kostenreduktion der Gleitringdichtungsanordnung erreicht werden.

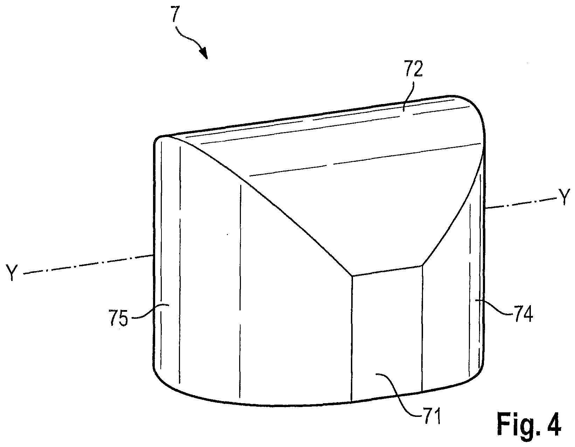

Fig. 4 zeigt eine alternative Ausbildung der Passfeder 7 gemäß einem zweiten Ausführungsbeispiel der Erfindung. Wie aus Fig. 4 ersichtlich ist, weist die Passfeder 7 des zweiten Ausführungsbeispiels ebenfalls einen Basisbereich 71 und einen oberen Abschlussbereich 72 auf, welcher bogenförmig ausgebildet ist. Im Unterschied zum ersten Ausführungsbeispiel weist die Passfeder 7 des zweiten Ausführungsbeispiels allerdings eine erste abgerundete Stirnseite 74 und eine zweite abgerundete Stirnseite 75 auf. Hierbei bildet die erste abgerundete Stirnseite 74 eine Anlagefläche für die Passfeder 7, welche mit einer Anlagefläche am Mitnehmerelement 6 in Kontakt ist.

Die Anlagefläche am Mitnehmerelement 6 kann dabei ebenfalls mittels eines Fräsverfahrens hergestellt werden, wobei ein Radius des Fräsers bzw. der durch den Fräser im Mitnehmerelement 6 gebildeten Ausnehmung einem Radius der ersten abgerundeten Stirnseite 74 entspricht. Dadurch kann auf einfache Weise auch eine Passung zwischen der Passfeder 7 und dem Mitnehmerelement 6 sichergestellt werden.

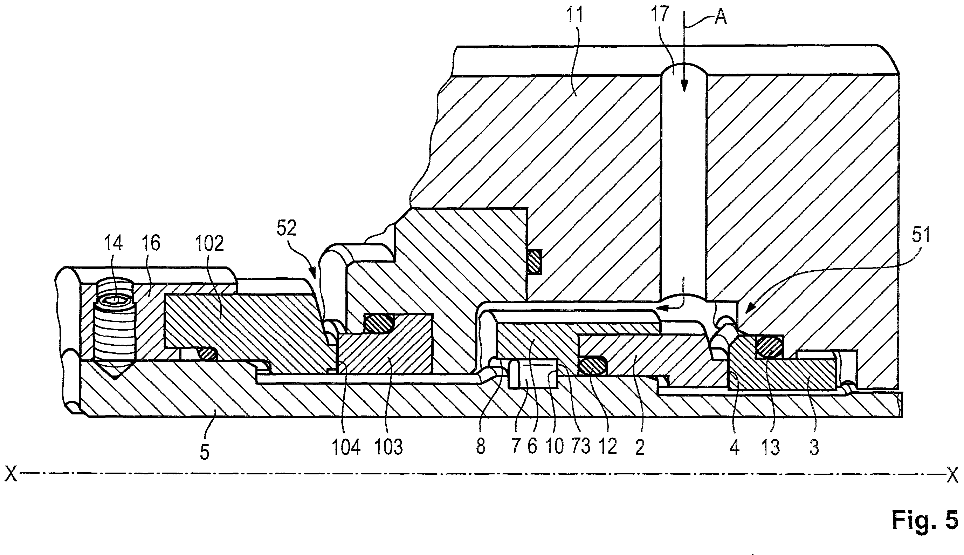

Fig. 5 zeigt eine Gleitringdichtungsanordnung 1 gemäß einem dritten Ausführungsbeispiel der Erfindung. Wie aus Fig. 5 ersichtlich ist, umfasst die Gleitringdichtungsanordnung 1 eine erste und eine zweite Gleitringdichtung 51, 52. Die erste Gleitringdichtung 51 entspricht dabei der in Fig. 1 beschriebenen Anordnung. Die Passfeder 7 liegt mit der ebenen Anlagefläche 73 an der ebenen Anlagefläche 10 an. Es sei angemerkt, dass die Passfeder 7 auch mit einer abgerundeten Stirnseite entsprechend Figur 4 ausgebildet sein kann, so dass sich ein linienförmiger Kontakt zwischen der Stirnseite der Passfeder und der ebenen Anlagefläche 10 ergeben würde. Die zweite Gleitringdichtung 52 umfasst einen zweiten rotierenden Gleitring 102,
einen zweiten stationären Gleitring 103 und ein zweites Mitnehmerelement 16. Das zweite Mitnehmerelement 16 ist dabei über eine Klemmschraube 14 mit der einteiligen Wellenhülse 5 verbunden. Die in Fig. 5 gezeigte Gleitringdichtungsanordnung des dritten Ausführungsbeispiels ist eine sogenannte Tandemanordnung, bei der zwei Gleitringdichtungen in Reihe geschaltet sind. Hierbei wird durch einen Kanal 17 ein Sperrfluid (Pfeil A) zu beiden Gleitringdichtungen zugeführt. Es sei angemerkt, dass selbstverständlich eine Drehmomentübertragung an der zweiten Gleitringdichtung 52 zwischen der Wellenhülse 5 und dem zweiten Mitnehmerelement 16 ebenfalls über eine erfindungsgemäße Passfeder erfolgen kann.

### Bezugszeichenliste

- 1: Gleitringdichtungsanordnung
- 2: rotierender Gleitring
- 3: stationärer Gleitring
- 4: Dichtspalt
- 5: Wellenhülse
- 6: Mitnehmerelement
- 7: Passfeder
- 8: erste Ausnehmung
- 9: zweite Ausnehmung
- 10: Anlagefläche
- 11: Gehäuse
- 12: O-Ring
- 13: O-Ring
- 14: Klemmschraube
- 16: zweites Mitnehmerelement
- 17: Kanal
- 51: erste Gleitringdichtung
- 52: zweite Gleitringdichtung
- 71: Basisbereich
- 72: oberer Abschlussbereich
- 73: Anlageebene
- 74: erste abgerundete Stirnseite
- 75: zweite abgerundete Stirnseite

## Patentansprüche

1. Gleitringdichtungsanordnung, umfassend:
- wenigstens eine erste Gleitringdichtung mit einem rotierenden Gleitring (2) und einem stationären Gleitring (3), welche zwischen sich einen Dichtspalt (4) begrenzen,
- ein Rotationsbauteil (5), und
- wenigstens eine Passfeder (7),
**gekennzeichnet durch** ein Mitnehmerelement (6), um eine Rotation des Rotationsbauteils auf den rotierenden Gleitring (2) zu übertragen,
- wobei die Passfeder (7) zwischen dem Rotationsbauteil und dem Mitnehmerelement (6) angeordnet ist, um eine Drehmomentübertragung zwischen dem Rotationsbauteil (5) und dem Mitnehmerelement (6) zu ermöglichen,
- wobei die Passfeder (7) einen Basisbereich (71) und einen oberen Abschlussbereich (72) aufweist, und wobei der obere Abschlussbereich (72) bogenförmig ausgebildet ist.

2. Gleitringdichtungsanordnung nach Anspruch 1, **dadurch gekennzeichnet, dass** das Mitnehmerelement (6) eine axiale Anlagefläche (10) aufweist, an welcher die Passfeder (7) anliegt.

3. Gleitringdichtungsanordnung nach einem der vorangehenden Ansprüche, **dadurch gekennzeichnet, dass** das Rotationsbauteil eine einteilige Wellenhülse (5) ist.

4. Gleitringdichtungsanordnung nach einem der vorhergehenden Ansprüche, **dadurch gekennzeichnet, dass** der obere Abschlussbereich (72) der Passfeder (7) im Schnitt halbkreisförmig ist.

5. Gleitringdichtungsanordnung nach Anspruch 4, **dadurch gekennzeichnet, dass** der halbkreisförmige obere Abschlussbereich (72) über eine gesamte axiale Länge der Passfeder (7) verläuft.

6. Gleitringdichtungsanordnung nach Anspruch 4 oder 5, **dadurch gekennzeichnet, dass** die Passfeder (7) eine ebene Anlagefläche (73) aufweist, welche an der axialen Anlagefläche (10) des Mitnehmerelements (6) anliegt.

7. Gleitringdichtungsanordnung nach Anspruch 2 oder 3, **dadurch gekennzeichnet, dass** die Passfeder (7) wenigstens eine erste abgerundete Stirnseite (74) aufweist.

8. Gleitringdichtungsanordnung nach Anspruch 7, **dadurch gekennzeichnet, dass** die Passfeder (7) eine zweite abgerundete Stirnseite (75) aufweist.

9. Gleitringdichtungsanordnung nach einem der vorhergehenden Ansprüche, **dadurch gekennzeichnet, dass** das Mitnehmerelement (6) eine Ausnehmung (8) zur teilweisen Aufnahme der Passfeder (7) aufweist, wobei die Ausnehmung (8) eine Fräsausnehmung mit einer bogenförmigen Form ist.

10. Gleitringdichtungsanordnung nach einem der vorhergehenden Ansprüche, **gekennzeichnet durch** eine Vielzahl von Passfedern (7), welche entlang eines Um- fangs der Wellenhülse (5) in gleichmäßigen Abständen angeordnet sind.

11. Gleitringdichtungsanordnung nach einem der vorhergehenden Ansprüche, umfassend eine zweite Gleitringdichtung (52) mit einem zweiten rotierenden Gleitring (102) und einem zweiten stationären Gleitring (103).

## Claims

1. Mechanical seal arrangement, comprising:
- at least one first mechanical seal having a rotating slide ring (2) and a stationary slide ring (3) which delimit a sealing gap (4) therebetween,
- a rotational component (5), and
- at least one feather key (7),
**characterized by** an entrainment member (6) for transmitting a rotation of the rotational component to the rotating slide ring (2),
- wherein the feather key (7) is arranged between the rotational component and the entrainment member (6) to enable a torque transmission between the rotational component (5) and the entrainment member (6),
- wherein the feather key (7) includes a base portion (71) and an upper end portion (72), and wherein the upper end portion (72) is formed in an arcuate manner.

2. Mechanical seal arrangement according to claim 1, **characterized in that** the entrainment member (6) includes an axial bearing surface (10) against which the feather key (7) lies.

3. Mechanical seal arrangement according to any one of the preceding claims, **characterized in that** the rotational component is a one-piece shaft bushing (5).

4. Mechanical seal arrangement according to any one of the preceding claims, **characterized in that** the upper end portion (72) of the feather key (7) has a semi-circular cross-section.

5. Mechanical seal arrangement according to claim 4, **characterized in that** the semi-circular upper end portion (72) extends over an entire axial length of the feather key (7).

6. Mechanical seal arrangement according to claim 4 or 5, **characterized in that** the feather key (7) includes a planar bearing surface (73), which lies against the axial bearing surface (10) of the entrainment member (6).

7. Mechanical seal arrangement according to claim 2 or 3, **characterized in that** the feather key (7) includes at least one first rounded end face (74).

8. Mechanical seal arrangement according to claim 7, **characterized in that** the feather key (7) includes a second rounded end face (75).

9. Mechanical seal arrangement according to any one of the preceding claims, **characterized in that** the entrainment member (6) includes a recess (8) for partially receiving the feather key (7), wherein the recess (8) is a milled recess having an arcuate shape.

10. Mechanical seal arrangement according to any one of the preceding claims, **characterized by** a plurality of feather keys (7) which are arranged at equal distances along a circumference of the shaft bushing (5).

11. Mechanical seal arrangement according to any one of the preceding claims, comprising a second mechanical seal (52) with a second rotating slide ring (102) and a second stationary slide ring (103).

## Revendications

1. Agencement d'étanchéité à bague de glissement, comprenant :
- au moins une première bague de glissement d'étanchéité avec une bague de glissement (2) rotative et une bague de glissement (3) stationnaire qui délimitent entre elles un interstice d'étanchéité (4),
- un composant de rotation (5), et
- au moins un ressort d'ajustage (7),
**caractérisé par** un élément d'entraînement (6) afin de transmettre une rotation du composant de rotation à la bague de glissement (2) rotative,
- dans lequel le ressort d'ajustage (7) est agencé entre le composant de rotation et l'élément d'entraînement (6) afin de permettre une transmission de couple entre le composant de rotation (5) et l'élément d'entraînement (6),
- dans lequel le ressort d'ajustage (7) présente une zone de base (71) et une zone de terminaison (72) supérieure, et dans lequel la zone de terminaison (72) supérieure est réalisée en forme arquée.

2. Agencement d'étanchéité à bague de glissement selon la revendication 1, **caractérisé en ce que** l'élément d'entraînement (6) présente une surface d'appui axiale (10) contre laquelle le ressort d'ajustage (7) repose.

3. Agencement d'étanchéité à bague de glissement selon l'une des revendications précédentes, **caractérisé en ce que** le composant de rotation est une douille ondulée (5) en une seule partie.

4. Agencement d'étanchéité à bague de glissement selon l'une des revendications précédentes, **caractérisé en ce que** la zone de terminaison (72) supérieure du ressort d'ajustage (7) est en forme de demi-cercle en coupe.

5. Agencement d'étanchéité à bague de glissement selon la revendication 4, **caractérisé en ce que** la zone de terminaison (72) supérieure en forme de demi-cercle s'étend sur une longueur axiale entière du ressort d'ajustage (7).

6. Agencement d'étanchéité à bague de glissement selon la revendication 4 ou 5, **caractérisé en ce que** le ressort d'ajustage (7) présente une surface d'appui plane (73) qui repose contre la surface d'appui axiale (10) de l'élément d'entraînement (6).

7. Agencement d'étanchéité à bague de glissement selon la revendication 2 ou 3, **caractérisé en ce que** le ressort d'ajustage (7) présente au moins un premier côté avant arrondi (74).

8. Agencement d'étanchéité à bague de glissement selon la revendication 7, **caractérisé en ce que** le ressort d'ajustage (7) présente un second côté avant arrondi (75).

9. Agencement d'étanchéité à bague de glissement selon l'une des revendications précédentes, **caractérisé en ce que** l'élément d'entraînement (6) présente un évidement (8) pour le logement partiel du ressort d'ajustage (7), dans lequel l'évidement (8) est un évidement fraisé avec une forme arquée.

10. Agencement d'étanchéité à bague de glissement selon l'une des revendications précédentes, **caractérisé par** une pluralité de ressorts d'ajustage (7) qui sont agencés le long d'une périphérie de la douille ondulée (5) à des distances régulières.

11. Agencement d'étanchéité à bague de glissement selon l'une des revendications précédentes, comprenant une seconde bague de glissement d'étanchéité (52) avec une seconde bague de glissement (102) rotative et une seconde bague de glissement (103) stationnaire.
